# EUROPEAN PATENT APPLICATION

(11) **EP 4 737 768 A1**
(43) Date of publication of application: **06.05.2026**
(21) Application number: 24848335.6
(22) Date of filing: 01.08.2024
(51) Int. Cl.: F16H 57/023

(54) **GEARBOX CENTRAL SHAFT FOR WIND TURBINE GENERATOR**

(30) Priority: 01.08.2023 CN 202310960186
(71) Applicant: ZF Wind Power (Tianjin) Co., Ltd., Tianjin 300402 (CN)
(72) Inventor: ZHOU, Dan, Tianjin 300402 (CN)
(74) Representative: Hentrich Patent- & Rechtsanwaltspartnerschaft mbB
(86) International application number: PCT/CN2024/109118
(87) International publication number: WO 2025/026380

(57) **Abstract**

A gearbox central shaft for a wind turbine generator, which is configured to simplify the complicated structure of the gearbox central shaft. The gearbox central shaft includes a sun shaft (2), an output shaft (3) and a connecting shaft (4); where the sun shaft is configured to be connected to a sun gear (5) and driven to rotate by the sun gear; the output shaft is configured to be connected to and drive an output gear (6) to rotate; and the connecting shaft includes a sun shaft connecting portion (7), a middle section (8) and an output shaft connecting portion (9), the sun shaft connecting portion being connected to the sun shaft at an axial end of the connecting shaft and being elastically connected to the middle section, and the output shaft connecting portion being connected to the output shaft at the other axial end of the connecting shaft and being elastically connected to the middle section.

## Description

### Technical Field

The present invention relates to a shaft, and in particular to a gearbox central shaft for a wind turbine generator.

### Background Art

A main shaft of a wind turbine generator drives a generator by means of a planetary speed-increasing gearbox, the main shaft of the wind turbine generator provides a low-speed and high-torque rotational input to the gearbox, the gearbox realizes speed increasing and torque reducing, and thus provides a high-speed and low-torque rotational output to the generator. A gearbox central shaft includes a sun shaft driven to rotate by a sun gear, and further includes an output shaft which drives an output gear to rotate, and thus a gearbox output shaft connected to the main shaft of the generator is driven to rotate. The sun shaft is engaged with the output shaft by means of a spline to drive the output shaft to rotate, and the gearbox central shaft needs to be provided with a lubrication structure for lubricating the spline, resulting in a complex structure.

### Summary

An objective of the present invention is to provide a gearbox central shaft for a wind turbine generator, which is configured to simplify the complicated structure of the gearbox central shaft.

According to embodiments of the present invention, the gearbox central shaft includes a sun shaft, an output shaft and a connecting shaft; where the sun shaft is configured to be connected to a sun gear and driven to rotate by the sun gear; the output shaft is configured to be connected to and drive an output gear to rotate; and the connecting shaft includes a sun shaft connecting portion, a middle section and an output shaft connecting portion, the sun shaft connecting portion being connected to the sun shaft at one axial end of the connecting shaft and being elastically connected to the middle section, and the output shaft connecting portion being connected to the output shaft at the other axial end of the connecting shaft and being elastically connected to the middle section.

In one or more embodiments, the connecting shaft further includes elastic necks, and the sun shaft connecting portion and the output shaft connecting portion are connected to the middle section by means of the elastic necks, respectively; and each of the elastic necks includes a bent portion that extends from a first end and is bent to a second end, the first end is fixed to the middle section, the second end is connected to the sun shaft connecting portion or the output shaft connecting portion, and the bent portion has a thickness less than that of the middle section.

In one or more embodiments, the bent portion extends from the first end and is bent at 90 degrees to the second end.

In one or more embodiments, the elastic neck further includes a thickness-reduced portion, the thickness-reduced portion extends from the middle section to the first end of the bent portion, and a thickness of the thickness-reduced portion is reduced gradually from the middle section to the first end of the bent portion.

In one or more embodiments, a thickness of the bent portion is a thickness of the thickness-reduced portion at a connection with the first end of the bent portion.

In one or more embodiments, the sun shaft connecting portion includes a flange, and the flange is bolted to a shaft end surface of the sun shaft.

In one or more embodiments, the sun shaft connecting portion includes a side wall, and the side wall is located at an outer periphery of the sun shaft and fits against an outer peripheral surface of the sun shaft.

In one or more embodiments, the output shaft connecting portion includes a flange, and the flange is bolted to a shaft end surface of the output shaft.

In one or more embodiments, the output shaft connecting portion includes a bearing mounting groove, and the bearing mounting groove protrudes toward an outer periphery of the output shaft to assemble an inner ring of a bearing supporting the output shaft.

In one or more embodiments, the bearing mounting groove includes an outer peripheral wall and a shaft end wall that are connected to each other, the outer peripheral wall is configured to support an inner peripheral surface of the bearing inner ring, and the shaft end wall is configured to fit against a shaft end surface of the bearing inner ring.

The embodiments of the present invention have at least the following beneficial effects.

The sun shaft drives the output shaft to rotate by means of the connecting shaft, a torque is transmitted between the sun shaft and the output shaft without providing a spline structure, and the gearbox central shaft does not need spline lubrication structures such as a lubrication oil passage, a spline oil pocket and an oil retainer, and thus has a simpler structure, lighter weight and lower cost.

### Brief Description of the Drawings

The above and other features, properties, and advantages of the present invention will become more apparent from the following description with reference to the drawings and the embodiments. In the figures:
FIG. 1 shows a sectional view of a gearbox central shaft; and
FIG. 2 shows a sectional view of a deformed connecting shaft.

### List of reference signs:

1. Gearbox central shaft;
2. Sun shaft;
3. Output shaft;
4. Connecting shaft;
5. Sun gear;
6. Output gear;
7. Sun shaft connecting portion;
8. Middle section;
9. Output shaft connecting portion;
10. First flange;
11. Side wall;
12. Second flange;
13. Bearing mounting groove;
14. Bearing;
15. Bearing inner ring;
16. Outer peripheral wall;
17. Shaft end wall;
18. Elastic neck;
19. Bent portion;
20. First end;
21. Second end;
22. Thickness-reduced portion;
23. Thickness-reduced surface.

### Detailed Description of Embodiments

Reference will now be made in detail to the embodiments of the present invention, and one or more examples of which are illustrated in the drawings. Each example is provided to explain the present invention, but not to limit the present invention. In fact, it will be apparent to those skilled in the art that various modifications and variations can be made in the present invention without departing from the scope or spirit of the present invention. For example, the features illustrated or described as part of an embodiment can be used with another embodiment to provide a further embodiment. Therefore, the present invention is intended to cover the modifications and variations that fall within the scope of the appended claims and their equivalents.

It should be noted that these and other subsequent drawings are merely examples and not drawn to scale, and should not be construed as limiting the scope of protection actually claimed by the present invention.

The terms such as "first" and "second" may be used interchangeably to distinguish one feature from another feature, and are not intended to mean that each feature must be located in a position as shown in each embodiment.

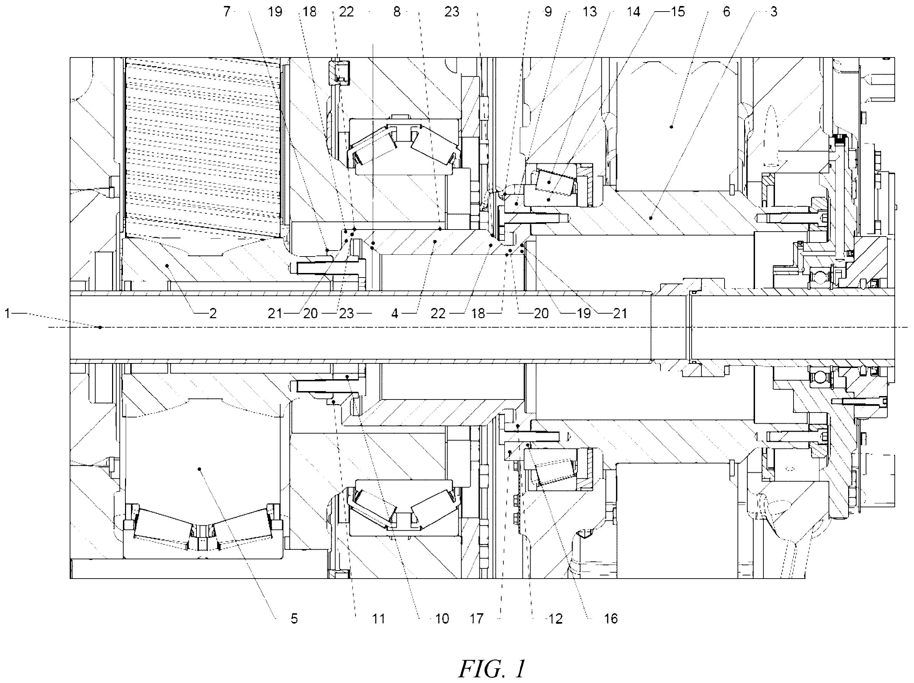

As shown in FIG. 1, a gearbox central shaft 1 includes a sun shaft 2, an output shaft 3 and a connecting shaft 4.

As shown in FIG. 1, the sun shaft 2 is a mandrel of a sun gear 5 and is connected to and rotatable together with the sun gear 5. The sun gear 5 may form a planetary gear train (not shown) with a planetary gear, a ring gear and the like, the sun gear 5 is an output gear of the planetary gear train, and the sun shaft 2 is an output shaft of the planetary gear train. A main shaft (not shown) of the wind turbine generator provides a low-speed and high-torque rotational input to the planetary gear train to drive the sun gear 5 to rotate, and the sun gear 5 drives the sun shaft 2 to rotate.

As shown in FIG. 1, the output shaft 3 is a mandrel of an output gear 6, and is connected to and rotatable together with the output gear 6. The output shaft 3 may have a hollow core portion, and is also known as a hollow shaft. The output gear 6 may form a speed-increasing gear set (not shown) together with and other gears, the output gear 6 is an input gear of the speed-increasing gear set, the output shaft 3 is an input shaft of the speed-increasing gear set, and a mandrel of a final gear in the speed-increasing gear set is a gearbox output shaft (not shown) connected to a main shaft of a generator. The output shaft 3 provides a low-speed and high-torque rotational input to the speed-increasing gear set, to drive the output gear 6 to rotate, and the output gear 6 drives the final gear in the speed-increasing gear set to rotate, thus driving the main shaft of the generator to rotate.

As shown in FIG. 1, the connecting shaft 4 includes a sun shaft connecting portion 7, a middle section 8 and an output shaft connecting portion 9. The sun shaft connecting portion 7 is located at one axial end of the connecting shaft 4 and connected to the sun shaft 2. The output shaft connecting portion 9 is located at the other axial end of the connecting shaft 4 and connected to the output shaft 3. A torque of the sun shaft 1 is transmitted to the output shaft 3 by means of the connecting shaft 4, the sun shaft 1 drives the output shaft 3 to rotate by means of the connecting shaft 4, and the sun shaft 2, the connecting shaft 4 and the output shaft 3 rotate together. The torque is transmitted between the sun shaft 2 and the output shaft 3 without providing a spline structure, and the gearbox central shaft 1 does not need spline lubrication structures such as a lubrication oil passage, a spline oil pocket and an oil retainer, and thus has a simpler structure, lighter weight and lower cost.

If the spline structure is provided, the output shaft 3 needs to be manufactured by forging and subjected to nitriding treatment, to allow the surface of the output shaft 3 to meet the requirement of spline machining. In the embodiments of the present application, since it is not necessary to provide the spline structure for torque transmission, the output shaft 3 may be manufactured by casting, resulting in lower cost and lighter weight.

If the torque is transmitted by means of the spline structure, the sun shaft 2 needs to extend to an inner peripheral side of the output shaft 3, to allow a spline on an outer peripheral surface of the sun shaft 2 to be engaged with a spline on an inner peripheral surface of the output shaft 3. In the embodiments of the present application, the sun shaft 2 is axially connected to the output shaft 3 by means of the connecting shaft 4, and the sun shaft 2 and the connecting shaft 4 extend to an axial end of the output shaft 3 without extending to the inner peripheral side of the output shaft 3, resulting in a shorter length. In addition, the connecting shaft 4 may be manufactured by casting. Both of these aspects enable the gearbox central shaft 1 to have lighter weight and lower cost.

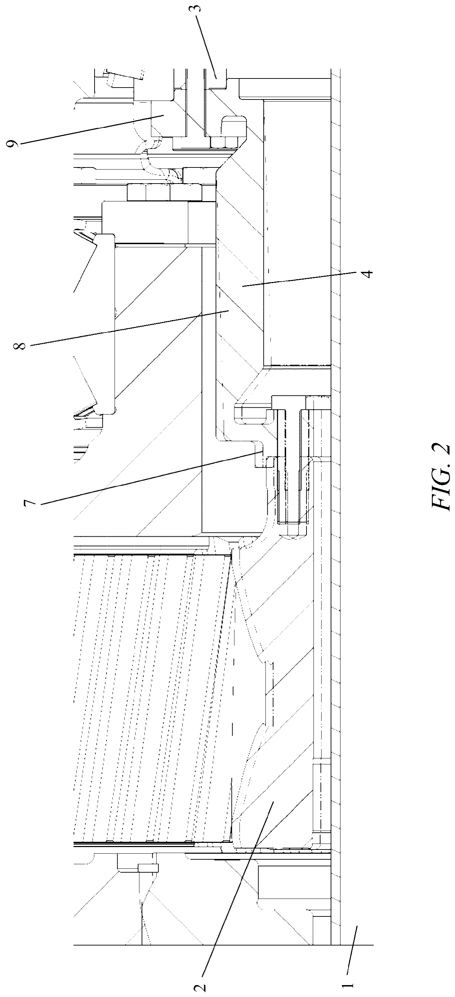

As shown in FIG. 1, a central axis of the middle section 8 is a central axis of the connecting shaft 4. The sun shaft connecting portion 7 is elastically connected to the middle section 8, and the output shaft connecting portion 9 is elastically connected to the middle section 8. Whether the connecting shaft 4 is deformed is affected by the relative position between the sun shaft 2 and the output shaft 3. If the central axis of the sun shaft 2 coincides with the central axis of the output shaft 3, the connecting shaft 4 is not deformed, the sun shaft connecting portion 7 is perpendicular to the central axis of the middle section 8, the central axis of the sun shaft connecting portion 7 coincides with the central axis of the middle section 8, the output shaft connecting portion 9 is perpendicular to the central axis of the middle section 8, and the central axis of the output shaft connecting portion 9 coincides with the central axis of the middle section 8. If the central axis of the sun shaft 2 does not coincide with the central axis of the output shaft 3, the connecting shaft 4 is deformed, and the output shaft connecting portion 9 is deflectable relative to the central axis of the middle section 8 to allow the central axis of the output shaft connecting portion 9 to be deflected relative to the central axis of the middle section 8, and/or the sun shaft connecting portion 7 is deflectable relative to the central axis of the middle section 8 to allow the central axis of the sun shaft connecting portion 7 to be deflected relative to the central axis of the middle section 8, compensating for the misalignment (e.g., angular misalignment) between the central axis of the output shaft 3 and the central axis of the sun shaft 2. As shown in FIG. 2, the central axis of the sun shaft 2 depicted by the solid line coincides with the central axis of the output shaft 3, and the connecting shaft 4 depicted by the solid line is not deformed. The sun shaft 2 depicted by the dotted line is offset downward in the figure relative to the sun shaft 2 depicted by the solid line, the central axis of the sun shaft 2 depicted by the dotted line does not coincide with the central axis of the output shaft 3, the connecting shaft 4 depicted by the dotted line is deformed, the middle section 8 is deflected downward in the figure relative to the output shaft connecting portion 9, to allow the central axis of the middle section 8 to be deflected downward in the figure relative to the central axis of the output shaft connecting portion 9, and the sun shaft connecting portion 7 is deflected downward in the figure relative to the middle section 8, to allow the central axis of the sun shaft connecting portion 7 to be deflected downward in the figure relative to the central axis of the middle section 8, compensating for the downward offset of the sun shaft 2 relative to the output shaft 3 in the figure.

As shown in FIG. 1, the sun shaft connecting portion 7 may include a first flange 10, and the first flange 10 is bolted to a shaft end surface of the sun shaft 2, resulting in a simple and reliable structure. A shaft end surface of the first flange 10 may fit against the shaft end surface of the sun shaft 2, and a threaded fastener can pass axially through the first flange 10, and be screwed into a threaded hole in the shaft end surface of the sun shaft 2 and locked. The threaded fastener may be a screw and a friction washer, or an articulated bolt composed of a pin and a bolt, and may also be a smart bolt that includes a sensor and thus has functions of stress acquisition and monitoring. In another embodiment, the sun shaft connecting portion 7 may include a coupling via which the sun shaft 2 is connected. In yet another embodiment, the sun shaft connecting portion 7 and the sun shaft 2 may be provided with engagement members, the sun shaft connecting portion 7 is in engaged connection with the sun shaft 2, and the engagement members may be, for example, fixed splines or racks. In yet another embodiment, the sun shaft connecting portion 7 is welded to the sun shaft 2.

As shown in FIG. 1, the sun shaft connecting portion 7 may include a side wall 11, and the side wall 11 is located at an outer periphery of the sun shaft 2 and fits against the outer peripheral surface of the sun shaft 2 to achieve radial limiting of the sun shaft connecting portion 7 and the sun shaft 2. The side wall 11 may be an annular protruding wall that protrudes axially toward the sun shaft 2 from the shaft end surface of the first flange 10.

As shown in FIG. 1, the output shaft connecting portion 9 may include a second flange 12, and the first flange 12 is bolted to a shaft end surface of the sun shaft 3, resulting in a simple and reliable structure. A shaft end surface of the second flange 12 may fit against the shaft end surface of the output shaft 3, and a threaded fastener can pass axially through the second flange 12, and be screwed into a threaded hole in the shaft end surface of the output shaft 3 and locked. The threaded fastener may be a screw and a friction washer, or an articulated bolt composed of a pin and a bolt.

As shown in FIG. 1, the output shaft connecting portion 9 may include a bearing mounting groove 13, and the bearing mounting groove 13 protrudes toward the outer periphery of the output shaft 3 to assemble an inner ring 15 of a bearing 14 supporting the output shaft 3, achieving radial and axial limiting of the bearing 14. The bearing mounting groove 13 can protrude toward a radial outer side from the second flange 12 and protrude out of the outer peripheral surface of the output shaft 3 in a radial direction, and the bearing mounting groove 13 is mounted to and fits with a portion of the bearing inner ring 15 axially protruding out of the shaft end surface of the output shaft 3.

As shown in FIG. 1, the bearing mounting groove 13 may include an outer peripheral wall 16 and a shaft end wall 17 that are connected to each other. The outer peripheral wall 16 supports an inner peripheral surface of the bearing inner ring 15, and an inner peripheral surface of the portion of the bearing inner ring 15 axially protruding out of the shaft end surface of the output shaft 3 is supported on the outer peripheral wall 16, achieving the radial limiting of the bearing 14. The shaft end wall 17 fits against the shaft end surface of the bearing inner ring 15, and a portion of the shaft end surface of the bearing inner ring 15 close to a radial inner side fits against the shaft end wall 17, achieving the axial limiting of the bearing 14. The outer peripheral wall 16 may be provided by the outer peripheral surface of the second flange 12, and the shaft end wall 17 may protrude toward the radial outer side from the outer peripheral surface of the second flange 12.

As shown in FIG. 1, the connecting shaft 4 may further include elastic necks 18, the sun shaft connecting portion 7 and the output shaft connecting portion 9 are connected to the middle section 8 by means of the elastic necks 18, respectively, to achieve the above elastic connection between the sun shaft connecting portion 7 and the output shaft connecting portion 9 and the middle section 8. Each of the elastic necks 18 may be a rotary member, the elastic neck 18 includes a bent portion 19, the bent portion 19 has a thickness less than that of the mid-section 8, and the reduced thickness improves the elasticity of the bent portion 19. The bent portion 19 extends from a first end 20 and is bent to a second end 21, the bent portion 19 is shaped to increase the elasticity thereof, and the first end 20 and the second end 21 have the ability to generate and recover from relative positional changes. The first end 20 is fixed to the middle section 8, and the second end 21 is connected to the sun shaft connecting portion 7 or the output shaft connecting portion 9, to allow the sun shaft connecting portion 7 or the output shaft connecting portion 9 to generate and recover from the positional changes relative to the middle section 8, achieving the above elastic connection.

As shown in FIG. 1, the bent portion 19 may extend from the first end 20 and be bent at 90 degrees to the second end 21, and thus has elasticity. The bent portion 19 may extend axially from the first end 20, and be bent at 90 degrees before extending radially to the second end 21. In another embodiment, the bent portion 19 may be bent at other angles. In yet another embodiment, the bent portion 19 may also extend from the first end 20 and curve to the second end 21, and thus has elasticity.

As shown in FIG. 1, the elastic neck 18 may further include a thickness-reduced portion 22. The thickness-reduced portion 22 extends from the middle section 8 to the first end 20 of the bent portion 19, the thickness of the thickness-reduced portion 22 is reduced gradually from the middle section 8 to the first end 20 of the bent portion 19, the first end 20 of the bent portion 19 is fixed to the middle section 8 by means of the thickness-reduced portion 22, and the thickness-reduced portion 22 which has a gradually reduced thickness reduces a stress at the joint between the middle section 8 and the bent portion 19 and improves the bearing capacity. The thickness-reduced portion 22 may extend axially from the middle section 8 to the first end 20 of the bent portion 19. The thickness-reduced portion 22 may form a thickness-reduced surface 23 on an inner peripheral surface or an outer peripheral surface, the thickness-reduced surface 23 is inclined to decrease the thickness, and the thickness-reduced portion 22 may have the same thickness reduction ratio in the axial direction, forming a thickness-reduced surface 23 having a cross section with an oblique straight-line profile.

As shown in FIG. 1, the thickness of the bent portion 19 is the thickness of the thickness-reduced portion 22 at a connection with the first end 20 of the bent portion 19, and compared with the thickness of the middle section 8, the thickness of the bent portion 19 is the reduced thickness by the thickness-reduced portion 22, to improve the elasticity of the bent portion 19.

As shown in FIG. 1, in the elastic neck 18, the bent portion 19 is curved or bent toward a thickness reduction side of the thickness-reduced portion 22, to form the elastic neck 18 having a hook-like cross section, improving the elasticity of the elastic neck 18. For example, in the radial direction, the sun shaft connecting portion 7 is located on the inner side of the middle section 8, in the elastic neck 18 connected to the sun shaft connecting portion 7, the thickness-reduced surface 23 is located on the inner peripheral surface of the thickness-reduced portion 22, and the bent portion 19 is bent toward the radial inner side from the first end 20 to the second end 21. For example, in the radial direction, the output shaft connecting portion 9 is located on the outer side of the middle section 8, in the elastic neck 18 connected to the output shaft connecting portion 9, the thickness-reduced surface 23 is located on the outer peripheral surface of the thickness-reduced portion 22, and the bent portion 19 is bent toward the radial outer side from the first end 20 to the second end 21.

The present invention is disclosed above with the embodiments, which, however, are not intended to limit the present invention. Any person skilled in the art can make possible changes and modifications without departing from the spirit and scope of the present invention.

## Claims

1. A gearbox central shaft for a wind turbine generator, **characterized by** comprising:
a sun shaft configured to be connected to a sun gear and driven to rotate by the sun gear;
an output shaft configured to be connected to and drive an output gear to rotate; and
a connecting shaft comprising a sun shaft connecting portion, a middle section and an output shaft connecting portion, the sun shaft connecting portion being connected to the sun shaft at one axial end of the connecting shaft and being elastically connected to the middle section, and the output shaft connecting portion being connected to the output shaft at the other axial end of the connecting shaft and being elastically connected to the middle section.

2. The gearbox central shaft according to claim 1, **characterized in that**
the connecting shaft further comprises elastic necks, and the sun shaft connecting portion and the output shaft connecting portion are connected to the middle section by means of the elastic necks, respectively; and
each of the elastic necks comprises a bent portion that extends from a first end and is bent to a second end, the first end is fixed to the middle section, the second end is connected to the sun shaft connecting portion or the output shaft connecting portion, and the bent portion has a thickness less than that of the middle section.

3. The gearbox central shaft according to claim 2, **characterized in that**
the bent portion extends from the first end and is bent at 90 degrees to the second end.

4. The gearbox central shaft according to claim 2, **characterized in that**
the elastic neck further comprises a thickness-reduced portion, the thickness-reduced portion extends from the middle section to the first end of the bent portion, and a thickness of the thickness-reduced portion is reduced gradually from the middle section to the first end of the bent portion.

5. The gearbox central shaft according to claim 4, **characterized in that**
a thickness of the bent portion is a thickness of the thickness-reduced portion at a connection with the first end of the bent portion.

6. The gearbox central shaft according to claim 1, **characterized in that**
the sun shaft connecting portion comprises a flange, and the flange is bolted to a shaft end surface of the sun shaft.

7. The gearbox central shaft according to claim 1, **characterized in that**
the sun shaft connecting portion comprises a side wall, and the side wall is located at an outer periphery of the sun shaft and fits against an outer peripheral surface of the sun shaft.

8. The gearbox central shaft according to claim 1, **characterized in that**
the output shaft connecting portion comprises a flange, and the flange is bolted to a shaft end surface of the output shaft.

9. The gearbox central shaft according to claim 1, **characterized in that**
the output shaft connecting portion comprises a bearing mounting groove, and the bearing mounting groove protrudes toward an outer periphery of the output shaft to assemble an inner ring of a bearing supporting the output shaft.

10. The gearbox central shaft according to claim 9, **characterized in that**
the bearing mounting groove comprises an outer peripheral wall and a shaft end wall that are connected to each other, the outer peripheral wall is configured to support an inner peripheral surface of a bearing inner ring, and the shaft end wall is configured to fit against a shaft end surface of the bearing inner ring.
